(19) Europäisches Patentamt
European Patent Office
Office européen des brevets

(11) Veröffentlichungsnummer: **0 098 947**
**B1**

(12) # EUROPÄISCHE PATENTSCHRIFT

(45) Veröffentlichungstag der Patentschrift: **13.11.85**

(51) Int. Cl.⁴: **C 08 G 77/50**, B 01 J 39/16, B 01 J 39/18

(21) Anmeldenummer: **83105145.3**

(22) Anmeldetag: **25.05.83**

(54) **Polymere Mono-, Di-, Tri- und Tetrasulfidverbindungen, Verfahren zu ihrer Herstellung und Verwendung.**

(30) Priorität: **13.07.82 DE 3226091**

(43) Veröffentlichungstag der Anmeldung: **25.01.84 Patentblatt 84/4**

(45) Bekanntmachung des Hinweises auf die Patenterteilung: **13.11.85 Patentblatt 85/46**

(84) Benannte Vertragsstaaten: **AT BE CH DE FR GB IT LI NL**

(56) Entgegenhaltungen:
**EP - A - 0 065 643**
**FR - A - 2 445 336**
**US - A - 4 113 696**

**CHEMICAL ABSTRACTS, Band 88, Nr. 12, 20 März 1978, Seite 26, Nr. 74902j, Columbus, Ohio, US, L.P. FINN et al.: "Crosslinked polymer for cation exchangers and redox exchangers"**
**CHEMICAL ABSTRACTS, Band 88, Nr. 6, 6 Februar 1978, Seite 20, Nr. 38429b, Columbus, Ohio, US, L.P. FINN et al.: "Structure and properties of poly(mercaptomethylsilsesquioxane) xerogel"**

(73) Patentinhaber: **Degussa Aktiengesellschaft, Weissfrauenstrasse 9, D-6000 Frankfurt am Main 1 (DE)**

(72) Erfinder: **Panster, Peter, Dr., Im Lochseif 8, D-6458 Rodenbach (DE)**
Erfinder: **Buder, Wolfgang, Dr., Farol de Itapoan Rua F, Nr. 7, BR-40.000 Salvador-Bahia (BR)**
Erfinder: **Gradl, Robert, Neuwiesenstrasse 25, D-8755 Alzenau (DE)**
Erfinder: **Kleinschmit, Peter, Dr., Wildaustrasse 19, D-6450 Hanau 9 (DE)**

**EP 0 098 947 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue polymere Sulfidverbindungen mit einer gegebenenfalls die Heteroatome Titan, Aluminium enthaltenden Organopolysiloxan-Grundstruktur, die als Elektronen- bzw. Schwefel-Donatoren zur Fixierung von Lewissäuren oder Übergangsmetallverbindungen geeignet sind. Alle diese neuen polymeren Verbindungen besitzen aufgrund der Organopolysiloxan-Matrix eine Reihe von Vorteilen gegenüber entsprechenden polymeren Sulfid-Systemen auf organischer Basis oder gegenüber trägerfixierten Sulfid-Systemen. Gleichzeitig werden Verfahren zur Herstellung und Verwendung dieser neuen Produkte beschrieben.

In der chemischen Synthese und Anwendung werden in neuerer Zeit vermehrt mit unlöslichen Trägersystemen kombinierte Reagenzien und Wirkstoffe eingesetzt, denn eine heterogene Verfahrensweise bietet teilweise beträchtliche Vorteile, z. B. in bezug auf Abtrennbarkeit, Recyclierbarkeit und Rückgewinnbarkeit der Reagenzien oder Wirkstoffe. Darüber hinaus können Stabilität und Lebensdauer eines nach diesem Prinzip modifizierten Agens oft deutlich erhöht oder auch seine Eigenschaften in einem gewünschten Sinne beeinflußt werden. Bereits seit längerer Zeit genutzt werden so funktionelle Polymere, die vor allem in Form von Ionenaustauschern und Adsorbern zu mehr oder weniger selektiven Entfernung von Ionen oder ionischen oder neutralen Verbindungen aus flüssigen oder gasförmigen Phasen dienen. Über den Stand der Technik auf dem Gebiet der Synthese und Anwendung funktioneller und funktionalisierter Polymersysteme informieren bereits zahlreiche Autoren, wie z. B. D. C. Neckers in CHEMTECH, Februar 1978, Seite 108; A. Patchornik und M. A. Kraus in Pure and Appl. Chem. 43, 503 (1975); C. U. Pittmann Jr. in Polymer News 5, 30 (1978); D. D. Whitehurst in CHEMTECH, Januar 1980, Seite 44 oder auch F. Martinola in Chem.-Ing.-Tech. 51, 728 (1979).

Als Trägermaterial eingesetzt wurden auf vorstehend genanntem Gebiet bisher insbesondere Polymersysteme organischer Natur. Diese erfüllen in einigen Fällen weitgehend die an sie gestellten Anforderungen in bezug auf thermische und mechanische Stabilität, Inertness gegenüber chemischen Angriffen, Zugänglichkeit der funktionellen Gruppen und Unlöslichkeit im verwendeten Solvens. Häufig treten aber auch Schwierigkeiten aufgrund der Tatsache auf, daß das organische, keine festliegende Struktur aufweisende Matrixgerüst nur eine geringe Temperaturstabilität besitzt, chemisch oder bakteriologisch relativ rasch abgebaut wird, im verwendeten Solvens zu stark quillt, angelöst wird, verklebt oder die funktionellen Gruppen nur bedingt zugänglich sind. Im Vergleich dazu eignen sich anorganische Polymere, wie z. B. Kieselsäure bzw. Kieselgel, Alumiumoxid oder Titandioxid, im Prinzip besser für derartige Zwecke, denn sie besitzen eine festliegende starre Struktur, Unquellbarkeit, hohe Temperatur- und Alterungsbeständigkeit, Unlöslichkeit und relativ leichte Zugänglichkeit der vorhandenen funktionellen Gruppen, da diese meist an der äußeren und inneren Oberfläche sitzen. Darüber hinaus weisen anorganische Polymere von der Rohstoffseite her noch den Vorteil der nahezu unbegrenzten Verfügbarkeit auf, was im Hinblick auf die immer knapper werdenden Erdöl- und Kohlevorräte für entsprechende organische Systeme sicher nicht zutrifft. Wenn bisher trotzdem überwiegend letztere zur Fixierung von Wirkstoffen verwendet wurden, so liegt dies vor allem an der meist nur sehr begrenzten Beladbarkeit anorganischer Polymersysteme und der in diesem Falle häufig nicht sonderlich stabilen Träger-Wirkstoff-Bindung.

Ziel der Erfindung ist daher, neue funktionelle Polymersysteme mit einer Organopolysiloxan-Grundstruktur, welche gegebenenfalls Heteroatome, wie Titan oder Aluminium enthält, in Gestalt von Mono-, Di-, Tri- und Tetrasulfidverbindungen bereitzustellen, die die Vorzüge an Kieselsäure fixierter Systeme von vornherein besitzen, aber nicht deren Nachteile, denn sie weisen darüber hinaus ein beträchtlich höheres Wirkstoff/Matrix-Gewichtsverhältnis auf, und die Matrixverankerung der funktionellen Einheit erfolgt über mehrere sehr stabile Si—C-Bindungen und nicht über meist nur eine gegenüber bestimmten Reagenzien labile Si—O—Si-Bindung.

Im einzelnen sind diese neuen polymeren Sulfidverbindungen dadurch gekennzeichnet, daß sie aus Einheiten der allgemeinen Formel (1)

$$R^1—S_{1-4}—R^2 \qquad (1)$$

aufgebaut sind, in der $R^1$ und $R^2$ für eine Gruppe der allgemeinen Formel (2) stehen,

$$R^3—SiO_{3/2} \qquad (2)$$

in der $R^3$ für eine lineare oder verzweigte Alkylengruppe mit 1 bis 12 C-Atomen, eine Cycloalkylengruppe mit 5 bis 8 C-Atomen oder für Einheiten

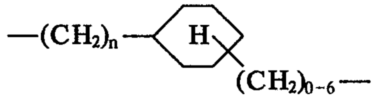

bzw.

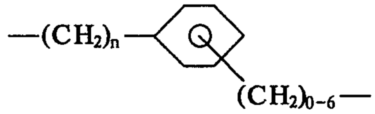

steht, in denen n eine Zahl von 1 bis 6 sein kann und die Zahl der Schwefel-ständigen Methylengruppen angibt, wobei $R^1$ und $R^2$ gleich oder verschieden sein können, und die freien Valenzen der Sauerstoffatome entweder durch Siliciumatome weiterer Gruppen der Formel (2) und/oder durch vernetzende Brückenglieder

$SiO_{4/2}$ oder $R'SiO_{3/2}$ oder $R'_2SiO_{2/2}$ bzw.
$TiO_{4/2}$ oder $R'TiO_{3/2}$ oder $R'_2TiO_{2/2}$ bzw.
$AlO_{3/2}$ oder $R'AlO_{2/2}$

abgesättigt sind, wobei R' eine Methyl- oder Ethylgruppe ist und das Verhältnis zwischen den Siliciumatomen in (2) zu den Brückenatomen Silicium, Titan und Aluminium von 1 : 0 bis 1 : 10 betragen kann.

Dieses Verhältnis richtet sich nach der gewünschten Porosität sowie danach, ob ein mehr wasserbenetzbares oder wasserabstoßendes Polymer hergestellt werden soll. Weiterhin kann über dieses Verhältnis die spezifische Oberfläche, das Schüttgewicht und vor allem der Sulfidgehalt und die Sulfiddichte im Polymer reguliert werden.

Bei Erhöhung des Vernetzergehalts sinken Sulfiddichte, Sulfidgehalt und hydrophober Charakter. Porosität, spezifische Oberfläche und Schüttgewicht nehmen zu. Durch Einbau von kokondensierbaren Heteroelementverbindungen, wie Aluminiumalkoholaten oder Titanestern können die Polymereigenschaften weiter modifiziert werden.

Typische Beispiele für die erfindungsgemäßen Mono-, Di-, Tri- und Tetrasulfidverbindungen sind Polymere, bestehend aus Einheiten der Summenformel

$S(CH_2SiO_{3/2})_2$ $S_4(CH_2SiO_{3/2})_2$

$S[(CH_2)_3SiO_{3/2}]_2$ $S[(CH_2)_{12}SiO_{3/2}]_2$

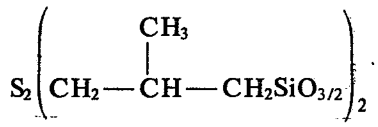 $S_4[(CH_2)_3SiO_{3/2}]_2$

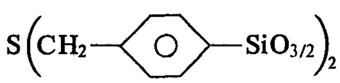 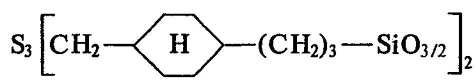

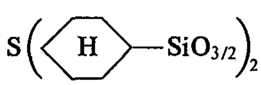 $S[(CH_2)_3SiO_{3/2}][(CH_2)_5SiO_{3/2}]$

$S[(CH_2)_3SiO_{3/2}]_2 \cdot 3\ SiO_2$ $S[(CH_2)_5SiO_{3/2}]_2 \cdot Al_2O_3$

Bevorzugt sind vom Gesichtspunkt der leichteren Zugänglichkeit, der sehr guten thermischen Stabilität und der Inertness gegenüber chemischen Angriffen, insbesondere Basen gegenüber, die polymeren Sulfide nach Formel (1), wobei $R^1$ und $R^2$ miteinander identisch sind. Unter diesen Verbindungen kommt wiederum in bezug auf die Verfügbarkeit der Ausgangsmaterialien den Vertretern mit Einheiten der Formel

$S_{1-4}(CH_2CH_2CH_2SiO_{3/2})_2$

besondere Bedeutung zu.

Gegenstand der Erfindung ist auch ein Verfahren zur Herstellung der polymeren Mono-, Di-, Tri- und Tetrasulfide. Dieses geht aus von den korrespondierenden Monomerverbindungen der allgemeinen Formel

$$R^4—S_{1-4}—R^5 \qquad (3)$$

in der $R^4$ und $R^5$ für eine Gruppe der allgemeinen Formel

$$R^3—Si(OAlk)_3 \qquad (4)$$

stehen, in der $R^3$ wiederum für eine lineare oder verzweigte Alkylengruppe mit 1 bis 12 C-Atomen, eine Cycloalkylengruppe mit 5 bis 8 C-Atomen oder für Einheiten

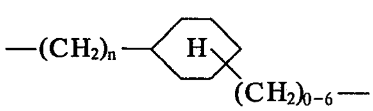 bzw. 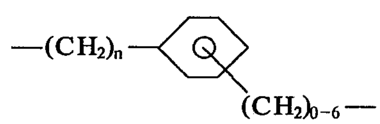

steht, in denen n eine Zahl von 1 bis 6 sein kann und die Zahl der Schwefel-ständigen Methylengruppen angibt, wobei $R^4$ und $R^5$ gleich oder verschieden sein können, Alk eine lineare oder verzweigte Alkylgruppe mit 1 bis 5 C-Atomen bedeutet, und setzt diese, gegebenenfalls nach Zusatz eines Lösungsvermittlers und/oder eines Vernetzers der allgemeinen Formel

$Me(OAlk)_{2-4}R'_{0-2}$ bzw. (5)

$Al(OAlk)_{2-3}R'_{0-1}$ (6)

wobei Me = Si oder Ti, Alk den bei Formel (4) genannten Bedeutungsumfang hat, R' eine Methyl- oder Ethylgruppe ist, mit mindestens der für eine vollständige Hydrolyse und Kondensation erforderlichen, bevorzugt jedoch überschüssigen Menge Wasser, bei Raumtemperatur bis 200°C, bei Normaldruck oder einem Überdruck, der der Summe der Partialdrucke bei der jeweiligen Temperatur entspricht, um. Der gegebenenfalls gleich nach seiner Bildung einer Behandlung bei Rückflußtemperatur ausgesetzte Feststoff wird anschließend von der flüssigen Phase abgetrennt, getrocknet, gegebenenfalls getempert, gegebenenfalls gemahlen und/oder klassifiziert, wobei die Reihenfolge dieser Maßnahmen variieren kann bzw. mehrere dieser Maßnahmen parallel nebeneinander durchgeführt werden können.

Die monomeren Verbindungen nach Formel (3) sind überwiegend bereits bekannte Verbindungen, die nach gängigen Verfahren, wie z. B. in den DE-AS 2 141 159, 2 141 160, 2 712 866, 2 405 758, in der DE-PS 2 542 534 oder von M. Schmidt und M. Wieber in Inorg. Chem. 1, 909 (1962) beschrieben, synthetisiert werden können. Als typische Vertreter für monomere Mono-, Di-, Tri- und Tetrasulfidverbindungen bzw. Monomergemische, aus denen die vorstehenden, beispielhaft genannten Polymervertreter erhalten werden können, wären zu nennen:

$S[CH_2Si(OC_4H_9)_3]_2$ $S_4[CH_2Si(OC_2H_5)_3]_2$

$S[(CH_2)_3Si(OC_3H_7)_3]_2$ $S[(CH_2)_{12}SiOCH_3)_3]_2$

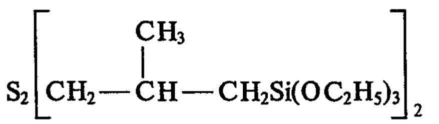

$S_4[(CH_2)_3Si(OC_2H_5)_3]_2$

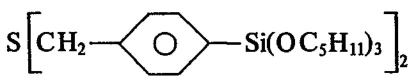

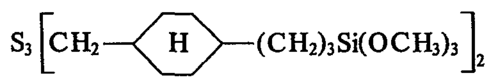

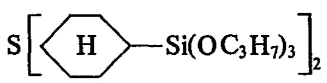

$S[(CH_2)_3Si(OC_2H_5)_3][(CH_2)_5Si(OCH_3)_3]$

$S[(CH_2)_3Si(OC_2H_5)_3]_2 \cdot 3\ Si(OC_2H_5)_4$

$S[(CH_2)_5Si(OCH_3)_3]_2 \cdot Al(OC_2H_5)_3$

Anstelle der als Ausgangsverbindungen eingesetzten Alkoxisilylderivate können natürlich auch die jeweils entsprechenden Chlor-, Brom-, Jod- oder Phenoxisilylvertreter eingesetzt werden, doch bietet deren Verwendung keine Vorteile, einerseits wegen der heftigen und schwer kontrollierbaren Hydrolyse sowie der stark an den Polymerprodukten anhaftenden Halogenide im Fall der Halogenderivate und andererseits wegen der schwierigen Zugänglichkeit der Phenoxisysteme.

Die Auswahl des gegebenenfalls bei der Hydrolyse verwendeten Lösungsmittels ist im Prinzip nicht kritisch, als besonders geeignet haben sich jedoch Solventien mit polarer Natur erwiesen, wie cyclische oder offenkettige Ether, Chlorkohlenwasserstoffverbindungen, aliphatische oder aromatische Nitroverbindungen, aliphatische oder aromatische Nitrile oder Dimethylformamid, Dimethylsulfoxid, Aceton, Diethylketon, Methylethylketon und insbesondere niedere Alkohole wie Methanol, Ethanol, n- und i-Propanol, n-, i- und t-Butanol oder n-Pentanol oder Gemische daraus.

Praktischerweise wird man bei Einsatz der bevorzugten niederen Alkohole den zu den an den Siliciumatomen des Monomersulfids bzw. an den Si-, Ti- und Al-Atomen der Vernetzer vorhandenen Alkoxigruppen korrespondierenden Vertreter auswählen. Analoges gilt natürlich auch im Fall des Einbaus von Vernetzern für die Auswahl des Monomersulfid/Vernetzervorstufe-Systems.

Die Hydrolyse und Polykondensation des Monomerproduktes bzw. Monomerproduktgemisches kann prinzipiell bei Raumtemperatur durchgeführt werden, im Sinne eines schnelleren Ablaufs dieser Reaktionen wird jedoch eine erhöhte Temperatur unterhalb 200°C, bevorzugt. Überdruck ist dabei nicht erforderlich, kann aber angewandt werden. Er entspricht dann der Summe der Partialdrucke der Komponenten der Reaktionsmischung bei der angewandten Reaktionstemperatur. Zum Zwecke der Erhöhung der Dispersität und Stabilität des nach erfolgter Polykondensation aus der Lösung ausgefallenen Gelee-artigen Polymerprodukts kann dieses in Suspension direkt einer ca. 1stündigen bis mehrstün-

digen Temperaturbehandlung, die bevorzugt bei Rückflußtemperatur des vorliegenden Lösungsmittelgemisches durchgeführt wird, ausgesetzt werden, wobei gleichzeitig eine intensive Durchmischung, gegebenenfalls in Verbindung mit einer Naßmahlung, erfolgen soll. Da die Polykondensation des Monomerproduktes besonders gut abläuft, wenn die Ausgangslösung möglichst konzentriert ist, erweist sich in der Regel ein Zusatz von weiterem Lösungsmittel und/oder Wasser zu der voluminösen Produktsuspension als vorteilhaft für eine gute Dispergierung und Temperaturbehandlung.

Eine Variante der beschriebenen erfindungsgemäßen Polykondensationsmethode stellt ein Verfahren dar, nach dem das Monomersulfid nach Formeln (3) und (4) oder seine Lösung in einem der vorstehend genannten Solvenzien gegebenenfalls zusammen mit einem Vernetzer nach Formel (5) bzw. (6) bei Raumtemperatur oder erhöhter Temperatur unter kräftigem Rühren in Wasser oder ein Wasser/Lösungsmittel-Gemisch eindosiert und der gebildete Feststoff, gegebenenfalls nach einer weiteren Temperaturbehandlung in Suspension, von der flüssigen Phase abgetrennt, getrocknet, gegebenenfalls getempert, gegebenenfalls gemahlen und/oder klassifiziert wird, wobei die Reihenfolge dieser Maßnahmen teilweise variieren kann bzw. mehrere dieser Maßnahmen parallel nebeneinander durchgeführt werden können.

Im Sinne einer raschen Polykondensation erweist es sich gelegentlich als vorteilhaft, der Hydrolysemischung einen der gängigen Polykondensationskatalysatoren, im einfachsten Fall z. B. geringe Mengen einer verdünnten wäßrigen HCl-Lösung, zuzusetzen.

Die Abtrennung des gebildeten polymeren Sulfids von der flüssigen Phase kann nach gängigen Techniken wie Filtrieren, Zentrifugieren und/oder Dekantieren erfolgen. Alternativ hierzu kann der Feststoff auch durch Verdampfen der flüchtigen Komponenten der Produktsuspension bei erhöhter Temperatur, gegebenenfalls unter Anlegen von Vakuum, isoliert werden. Um die am Feststoff eventuell anhaftenden organischen oder anorganischen Verunreinigungen zu entfernen, ist in jedem Fall ein Nachwaschen bzw. Extrahieren des isolierten Produkts mit dem verwendeten Lösungsmittel und/oder entsalztem Wasser angebracht. Anschließend kann bei Temperaturen von Raumtemperatur bis 250°C, gegebenenfalls unter Verwendung von Vakuum, getrocknet und nach Bedarf gemahlen und/oder klassifiziert werden.

Zur Erhöhung der Stabilität der Matrix erweist es sich oft als sinnvoll, eine Temperung des Produkts durchzuführen. Dies kann während oder nach der Trocknung in Form einer Temperaturbehandlung des polymeren Feststoffs über einen Zeitraum von mindestens einer Stunde bis zu vier Tagen bei 150—400°C und gegebenenfalls unter Anwendung von Vakuum geschehen.

Von ihren physikalischen Eigenschaften her gesehen, verhalten sich die neuen polymeren Mono-, Di-, Tri- und Tetrasulfidverbindungen wie spezielle, in Wasser und organischen Lösungsmitteln unlösliche Kieselsäuren oder Kieselgele und besitzen je nach Vorbehandlung spezifische Oberflächen von 0,01 bis 3000 $m^2/g$ und Teilchengrößendurchmesser von ca. 1 cm bis ca. 1 $\mu m$. Thermisch stabil sind sie an der Luft teilweise bis zu einer Temperatur von max. 350°C und unter Schutzgasatmosphäre bis zu einer Temperatur von ca. 400°C, wobei im allgemeinen mit steigendem Schwefelgehalt abnehmende Stabilität zu verzeichnen ist. Ihre stöchiometrische Zusammensetzung läßt sich relativ genau anhand von Elementaranalysen belegen.

Die Anwendungsmöglichkeiten der erfindungsgemäßen polymeren Sulfidverbindungen sind unterschiedlicher und vielfältiger Natur und lassen sich nicht unter einen Begriff zusammenfassen. Generell sind jedoch in diesem Zusammenhang die beiden Möglichkeiten des direkten und des erst nach einer weiteren chemischen Modifizierung erfolgenden indirekten Einsatzes zu unterscheiden, so daß diesen neuen Polymeren auch ein Zwischenproduktcharakter zukommt.

Insbesondere genannt sei die Verwendung der polymeren Monosulfidverbindungen zur Herstellung von sogenannten heterogenisierten Komplexkatalysatoren, bei der das Sulfid gleichzeitig die Funktion eines Trägers und die eines polymeren Komplexliganden innehat. Praktiziert wurde diese Einsatzmöglichkeit im Prinzip bereits vor einiger Zeit im Zuge der Herstellung bis dahin noch unbekannter polymerer Rhodium-Sulfid-Komplexverbindungen, die insbesondere sehr gute katalytische Eigenschaften bei Hydrierungen und Hydroformylierungen zeigen (DE-OS 28 34 691).

Die polymeren Sulfide wurden dabei jedoch niemals für sich isoliert und charakterisiert, sondern entweder zusammen mit einer Rhodiumkomponente gewonnen oder direkt in Lösung weiterverarbeitet, so daß dabei das Vorliegen der jetzt beanspruchten Monosulfidspezies nicht gesichert war. Bei der Herstellung genannter Rhodium-Sulfid-Komplexe könnte es sich aber gerade als nützlich erweisen, von dem isolierten und in seiner Zusammensetzung definierten polymeren Sulfid auszugehen, beispielsweise, wenn wasser- und alkoholfrei gearbeitet werden muß.

Sowohl die Monosulfid- als auch die Di-, Tri- und Tetrasulfidderivate erwiesen sich als hervorragend geeignet, um bestimmte Metallverbindungen und/oder Metallionen aus wäßrigen und organischen Lösungen zu entfernen. Während dabei im Fall der Monosulfide ein Donar-Akzeptor-Mechanismus wirksam ist, wodurch im Prinzip alle Metallionen und Metallverbindungen, insbesondere von Übergangsmetallen, die derartige Wechselwirkungen eingehen, aus einer Lösung entfernt werden können, kann im Fall der Di-, Tri- und Tetrasulfide von der Bildung schwerlöslicher Metallsulfide und/oder -mercaptide nach Reaktion des Metallions mit der Schwefelbrücke ausgegangen werden. Damit eignen sich insbesondere die Tri- und Tetrasulfide zum »Einfangen« schwerlösliche Sulfide, im ppm-Bereich vorliegender Metallionen.

Zu den Ionen oder Verbindungen, die Wechselwirkungen mit den polymeren Mono-, Di-, Tri- und Tetrasulfiden eingehen, zählen vor allem die der Elemente der VI.–VIII., I. und II. Nebengruppe des Periodensystems sowie die des Zinns und Bleis.

Das »Einfangen« der Metallverbindungen bzw. Metallionen mittels der neuen polymeren Sulfide, insbesondere der Monosulfid- bzw. Tetrasulfidverbindungen, kann von der Verfahrensseite her nach dem statischen oder dynamischen Prinzip vollzogen werden. Dazu wird die polymere Sulfidverbindung entweder in einer Austauschersäule oder andererseits in Suspension nach bekannten Techniken eingesetzt. Während für den ersteren Fall eine Mindestkorngröße von ca. 0,1—0,2 mm gewährleistet sein soll, um einen ausreichenden Durchfluß sicherzustellen, sollte das Produkt im anderen Fall feinteiliger eingestellt sein.

Die Anmeldung wird nachfolgend anhand von Beispielen zu den einzelnen Ausführungsformen unter Berücksichtigung der grundsätzlich wichtigen Ausgangsstoffe weiter erläutert.

## Beispiel 1

200,0 g (0,425 Mol) $S[CH_2Si(O-i-C_3H_7)_3]_2$ wurden in 300 ml Isopropanol gelöst. Zu der auf 70°C erhitzten klaren Lösung wurden anschließend unter langsamem Rühren binnen 1 Stunde insgesamt 200 ml entsalztes Wasser zugesetzt. Bereits nach Zugabe von 100 ml Wasser wurde die Lösung stark viskos und gelierte dann spontan zu einer puddingartigen durchsichtigen Masse. Nach Zusatz von weiteren 200 ml Wasser wurde die Mischung auf Rückflußtemperatur erhitzt und unter kräftigem Rühren in eine leicht bewegliche Suspension überführt. Es wurde insgesamt 2 Stunden unter Rückfluß gerührt, dann der Feststoff über eine Saugnutsche abfiltriert, mit 2 l entsalztem Wasser gewaschen, anschließend 12 Stunden bei 150°/100 mbar getrocknet, 24 Stunden bei 250°C getempert und dann an einer Kugelmühle gemahlen. Bei vollständiger Hydrolyse und Kondensation war eine Menge von 69,8 g zu erwarten. Erhalten werden konnten 73,0 g (104,6% der Theorie) eines feinpulvrigen, unlöslichen weißlichgelben Feststoffs, bestehend aus Polymereinheiten der Summenformel $S[CH_2SiO_{3/2}]_2$.

Analysendaten:

| | | | | |
|---|---|---|---|---|
| Theorie: | C 14,62, | H 2,45, | S 19,52, | Si 34,19%, |
| Gefunden: | C 14,85, | H 2,90, | S 19,14, | Si 33,42%. |

## Beispiel 2

250 g (0,60 Mol) $S_2[(CH_2)_3Si(OCH_3)_3][(CH_2)_5Si(OCH_3)_3]$ wurden in 400 ml Aceton gelöst. Die klare Lösung wurde dann zunächst mit 30 ml entsalztem Wasser und mit 1 ml 1nHCl-Lösung versetzt und 1 Stunde unter Rückfluß gerührt. Danach wurde abgekühlt und die viskose Lösung in ein Gemisch von 150 ml entsalztem Wasser und 50 ml Methanol unter langsamem Rühren binnen 30 min eingetragen. Anschließend wurde nach Zusatz von weiteren 100 ml $H_2O$ auf Rückflußtemperatur aufgeheizt und der gebildete Niederschlag weitere 2 Stunden bei dieser Temperatur gerührt. Im Verlauf dieser Nachbehandlung wurde der Feststoff mit Hilfe eines Ultra-Turrax in eine feindisperse Form überführt, anschließend abfiltriert, mit 200 ml Methanol sowie 1 l Wasser gewaschen, 12 Stunden bei 150°C getrocknet und anschließend 48 Stunden bei 200°C/80 mbar getempert. Es konnten 158,1 g (94,4% der Theorie) eines hellgelben, pulvrigen, polymeren Feststoffs, bestehend aus Polymereinheiten der Summenformel

$$S_2[(CH_2)_3SiO_{3/2}][(CH_2)_5SiO_{3/2}]$$

erhalten werden.

Analysendaten:

| | | | | |
|---|---|---|---|---|
| Theorie: | C 34,26, | H 5,75, | S 22,86, | Si 20,03%, |
| Gefunden: | C 33,89, | H 5,85, | S 22,07, | Si 19,46%. |

## Beispiel 3

500 g (1,13 Mol) $S[CH_2)_3Si(OC_2H_5)_3]_2$ wurden in 750 ml technischem Ethanol gelöst. Nach dem Erwärmen auf 60—70°C wurde die Lösung unter langsamem Rühren mit 500 ml entsalztem Wasser versetzt. Schon nach Zugabe der ersten 200 ml Wasser verdickte sich die Lösung und erstarrte schließlich zu einer festen Masse. Diese wurde nach Zusatz von weiteren 300 ml $H_2O$ in eine bewegliche Suspension überführt, die noch 1 Stunde unter Rückfluß gerührt wurde. Dann wurde abfiltriert, der verbleibende Feststoff mit insgesamt 1 l $H_2O$ gewaschen, 12 Stunden bei 120°C/100 mbar getrocknet und 24 Stunden bei 280°C/100 mbar getempert. Der hellgelbe, etwas klumpige Feststoff wurde dann in einer Kugelmühle grob mechanisch zerkleinert und in die Korngrößenfraktionen 0,2—0,6 mm, 0,05—0,2 mm sowie <0,05 mm klassifiziert.

Insgesamt konnten 224,7 g (90,3 d. Th.) des polymeren Monosulfids, bestehend aus Einheiten der Formel $S[(CH_2)_3SiO_{3/2}]_2$ erhalten werden.

Analysendaten:

| | |
|---|---|
| Theorie: | C 32,70, H 5,49, S 14,55, Si 25,49%, |
| Gefunden: | C 31,91, H 5,90, S 14,22, Si 24,84%. |

Eine DSC-Untersuchung dieses polymeren Sulfids ergab unter Stickstoff eine endotherme Zersetzung ab 342°C und an der Luft eine exotherme Zersetzung ab 303°C. Eine Dichtebestimmung ergab einen Wert von 1,36 $g/cm^3$ (DSC = Differentialkalometrie).

## Beispiel 4

Aus 450 g (0,83 Mol) $S_4[CH_2CH_2CH_2Si(OC_2H_5)_3]_2$, 500 ml Acetonitril und insgesamt 700 ml $H_2O$ und nach 12stündiger Trocknung bei 120°C/100 mbar sowie 12stündiger Temperung bei 180°C/100 mbar wurden analog Beispiel 3 255,9 g (96,8% d. Th.) eines polymeren Feststoffs, bestehend aus Einheiten der Formel $S_4[(CH_2)_3SiO_{3/2}]_2$ erhalten.

Analysendaten:

| | |
|---|---|
| Theorie: | C 22,76, H 3,82, S 40,51, Si 17,74%, |
| Gefunden: | C 23,20, H 3,97, S 39,90, Si 17,02%. |

Eine DSC-Untersuchung des polymeren Tetrasulfids ergab unter Stickstoff eine endotherme Zersetzung ab 215°C und an der Luft eine exotherme Zersetzung ab 279°C.

## Beispiel 5

300 g (0,49 Mol) $S[(CH_2)_{12}Si(OCH_3)_3]_2$ wurden zusammen mit 74,4 g (0,49 Mol) $Si(OCH_3)_4$ in 300 ml Methanol gelöst. Zu der auf 50°C erhitzten Lösung wurden binnen 1 Stunde 300 ml $H_2O$ zudosiert. Der dabei gebildete Feststoff wurde nach Zusatz von weiteren 200 ml Methanol noch 2 Stunden unter Rückfluß gerührt. Dann wurde der Feststoff durch Zentrifugieren vom Wasser/Methanol-Gemisch abgetrennt, mit 2 × 100 ml Methanol ausgewaschen und dann 10 Stunden bei 150°C getrocknet und anschließend 24 Stunden bei 200°C getempert. Bei vollständiger Hydrolyse und Co-Polykondensation waren 261,6 g des polymeren, vernetzten Sulfids, bestehend aus Einheiten der Formel $S[(CH_2)_{12}SiO_{3/2}]_2 \cdot SiO_2$ zu erwarten. Erhalten werden konnten 243,9 g (93,2% d. Th.).

Analysendaten:

| | |
|---|---|
| Theorie: | C 54,09, H 9,08, S 6,01, Si 15,81%, |
| Gefunden: | C 53,78, H 10,56, S 6,51, Si 14,09%. |

## Beispiel 6

Aus 300 g (0,55 Mol) $S_3[(CH_2)_3Si(OCH_3)_3][(CH_2)_3Si(O-n-C_4H_9)_3]$ und 11,6 g (0,055 Mol) $(H_5C_2)Ti(OC_2H_5)_3$ wurden in 300 ml n-Butanol analog Beispiel 4 147,15 g (91,4% d. Th.) eines Organopolysiloxans, bestehend aus Einheiten der Summenformel

$$S_3[(CH_2)_3SiO_{3/2}]_2 \cdot 0{,}1\ (H_5C_2)TiO_{3/2}$$

erhalten.

Analysendaten:

| | |
|---|---|
| Theorie: | C 25,28, H 4,28, Si 19,07, S 32,65, Ti 1,63%, |
| Gefunden: | C 25,02, H 4,76, Si 18,52, S 31,11, Ti 1,42%. |

Eine am Produkt durchgeführte Dichtebestimmung ergab einen Wert von 1,4 $g/cm^3$.

Beispiel 7

Aus 250 g (0,50 Mol)

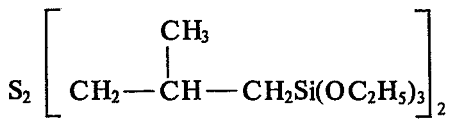

und 245,0 g (1,0 Mol) $Al(OC_4H_9)_3$ wurden in 300 ml Ethanol analog Beispiel 4 190,7 g (100,3% d. Th.) eines Organopolysiloxans, bestehend aus Einheiten der Summenformel

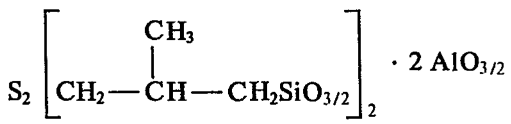

erhalten.

Analysendaten:

| | |
|---|---|
| Theorie: | C 25,12, H 4,22, S 16,76, Si 14,69, Al 14,11%, |
| Gefunden: | C 25,83, H 4,76, S 16,21, Si 14,13, Al 13,44%. |

Beispiel 8

Aus 498,9 g (1,0 Mol) $S[(CH_2)_5Si(OC_2H_5)_3]_2$, 148,3 g (1,0 Mol) $(H_3C)_2Si(OC_2H_5)_2$ und insgesamt 600 ml (400 + 200 ml) $H_2O$ wurden in 500 ml Ethanol analog Beispiel 4 327,9 g (93,5% d. Th.) eines Organopolysiloxans, bestehend aus Einheiten der Summenformel

$S[CH_2)_5SiO_{3/2}]_2 \cdot (H_3C)_2SiO_{2/2}$,

erhalten.

Analysendaten:

| | |
|---|---|
| Theorie: | C 34,25, H 7,47, S 9,14, Si 24,03%, |
| Gefunden: | C 33,88, H 8,21, S 8,97, Si 23,99%. |

Beispiel 9

350 g (0,58 Mol)

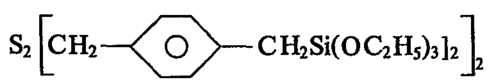

gelöst in 400 ml Ethanol, wurden auf 60°C erwärmt. Unter langsamem Rühren wurde die klare Lösung binnen 0,5 Stunden mit 200 ml entsalztem Wasser versetzt.

Der dabei gebildete gelartige Feststoff wurde nach Zugabe von weiteren 200 ml Wasser noch 2 Stunden bei Rückflußtemperatur kräftig gerührt, dann abgekühlt, abfiltriert und mit 2 l entsalztem Wasser gewaschen. Nach 8stündiger Trocknung bei 120°C/100 mbar und 55stündiger Temperung bei 200°C/100 mbar konnten 215,7 g (98,0% d. Th.) eines Organopolysiloxans, bestehend aus Einheiten der Summenformel

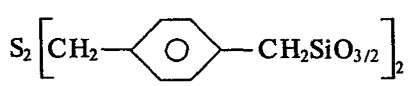

erhalten werden. Der grobkörnige Feststoff wurde anschließend an einer Hammermühle mechanisch zerkleinert.

Analysendaten:

| | |
|---|---|
| Theorie: | C 51,03, H 4,28, S 17,03, Si 14,92%, |
| Gefunden: | C 50,69, H 4,76, S 17,21, Si 14,23%. |

Beispiel 10

Aus 200 g (0,33 Mol)

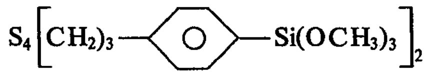

gelöst in 300 ml Methanol und insgesamt 300 ml entsalztem Wasser, wurden analog Beispiel 9 nach 10stündiger Trocknung bei 100°C/100 mbar und 48stündiger Temperung bei 150°C/100 mbar 153,5 g (99,4% d.Th.) eines polymeren Tetrasulfids, bestehend aus Einheiten der Formel

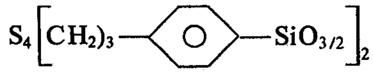

erhalten.

Analysendaten:

| | |
|---|---|
| Theorie: | C 46,12, H 2,15, S 27,36, Si 11,98%, |
| Gefunden: | C 45,74, H 2,10, S 26,88, Si 11,74%. |

Beispiel 11

Aus 270 g (0,59 Mol)

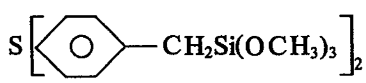

gelöst in 300 ml Methanol und insgesamt 350 ml entsalztem Wasser, wurden analog Beispiel 9 nach 8stündiger Trocknung bei 150°C und 48stündiger Temperung bei 220°C 184,5 g (98,2%d.Th.) eines Organopolysiloxans, bestehend aus Einheiten der Summenformel

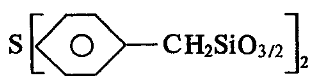

erhalten.

Analysendaten:

| | |
|---|---|
| Theorie: | C 53,13, H 3,82, S 10,13, Si 17,75%, |
| Gefunden: | C 52,98, H 3,79, S 10,04, Si 17,26%. |

Beispiel 12

Aus 410 g (0,78 Mol)

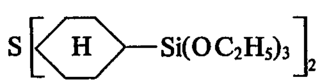

gelöst in 500 ml Ethanol und insgesamt 500 ml entsalztem Wasser, wurden analog Beispiel 9 nach 6stündiger Trocknung bei 150°C und 60stündiger Temperung bei 200°C 229,5 g (97,4%d.Th.) eines Organopolysiloxans, bestehend aus Einheiten der Summenformel

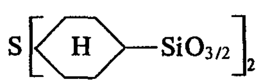

erhalten.

Analysendaten:

| | |
|---|---|
| Theorie: | C 47,96, H 6,71, S 10,67, Si 18,69%, |
| Gefunden: | C 47,50, H 6,82, S 10,29, Si 18,34%. |

## Beispiel 13

350 ml einer Produktlösung einer homogenen Hydrierung, bestehend aus ca. 20 ml n-Hexan und 330 ml Isopropanol mit einem Rhodium-Gehalt von 40 mg Rh/l und einem Triphenylphosphin- bzw. Triphenylphosphinoxid-Gehalt von 20 mg/l wurden mit 2,0 g eines Organopolysiloxans aus Beispiel 3, bestehend aus Einheiten der Summenformel $S[(CH_2)_3SiO_{3/2}]_2$, mit einer Korngröße von <50 μm, versetzt. Die Suspension wurde 1 Stunde unter Rückfluß gerührt. Anschließend wurde der Feststoff abzentrifugiert, mit 2 × 25 ml Isopropanol gewaschen und 5 Stunden bei 120°C getrocknet.

Zentrifugat und Waschflüssigkeit wurden zu insgesamt 390 ml Lösung vereinigt. Eine Bestimmung des Rhodium-Gehalts dieser Lösung ergab einen Gehalt von 0,8 mg Rh/l, d. h. die Lösung enthielt nur noch 2% der ursprünglich vorhandenen Rhodiummenge.

Eine Bestimmung des Rhodiumgehalts des getrockneten Feststoffes ergab eine Menge von 13,5 mg, das sind 96,4% der ursprünglich in Lösung vorhandenen Gesamtmenge.

## Beispiel 14

1200 ml einer wäßrigen Lösung von $RuCl_3$ mit einem Ruthenium-Gehalt von 25 mg Ru/l wurden mit 25 g des gemäß Beispiel 1 hergestellten Organopolysiloxans, bestehend aus Polymereinheiten der Summenformel $S[CH_2SiO_{3/2}]_2$, versetzt. Die Suspension wurde 2 Stunden bei 80°C gerührt. Danach wurde der Feststoff über ein Druckfilter abfiltriert und mit insgesamt 150 ml Wasser gewaschen. Eine Ruthenium-Analyse des mit der Waschflüssigkeit vereinigten Filtrats (insges. 1320 ml) ergab einen Ru-Gehalt von 0,7 mg Ru/l, d. h. es waren nur noch 3% der ursprünglichen Rutheniummenge in Lösung vorhanden.

## Beispiel 15

300 ml einer toluolischen Lösung des $IrCl_3(CH_3CN)_3$-Komplexes mit einem Iridium-Gehalt von 10 mg Ir/l wurden 3 Stunden mit 1,5 g eines an einer Kugelmühle gemahlenen (1 Stunde) Organopolysiloxans gemäß Beispiel 5, bestehend aus Einheiten der Formel $S[(CH_2)_{12}SiO_{3/2}]_2 \cdot SiO_2$, unter Rückfluß gerührt. Danach wurde abzentrifugiert, der Feststoff 2 × mit je 20 ml Toluol gewaschen und 5 Stunden bei 150°C/100 mbar getrocknet.

Waschflüssigkeit und Zentrifugat wurden vereinigt und auf 100 ml eingeengt. Eine Bestimmung des Iridium-Gehalts dieser Lösung ergab eine Gesamtmenge von 0,1 mg Ir (ca. 3% der ursprünglich vorhandenen Menge). Auf dem getrockneten Feststoff waren gemäß Analyse 2,8 mg Ir (ca. 93% der ursprünglichen Menge vorhanden).

## Beispiel 16

300 ml einer alkoholischen Lösung von $WOCl_4$, mit einem $WOCl_4$-Gehalt von 1,92 g/l und dementsprechend einem Wolfram-Gehalt von 1,03 g/l wurden mit 15 g eines Organopolysiloxans gemäß Beispiel 10, bestehend aus Einheiten der Summenformel

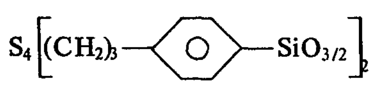

versetzt. Nach 3stündigem Rühren unter Rückfluß wurde abfiltriert, der Rückstand mit 2 × 50 ml Ethanol gewaschen. In Filtrat und Waschflüssigkeit wurde eine Gesamtmenge von 20 mg Wolfram gefunden. Das entspricht 6,5% der ursprünglich in Lösung vorhandenen Gesamtmenge.

## Beispiel 17

Nach analoger Behandlung wie in Beispiel 16 von 500 ml einer wäßrigen Lösung, die einen Gehalt von 20 mg/l $Cr^{3+}$ aufwies, mit 8 g des polymeren Sulfids gemäß Beispiel 6 konnten nur noch 5% der ursprünglich vorhandenen $Cr^{3+}$-Menge in Lösung nachgewiesen werden.

## Beispiel 18

Nach analoger Behandlung wie in Beispiel 16 von 350 ml einer methanolischen Lösung, die einen $Mn^{2+}$-Gehalt von 300 mg/l aufwies, mit 6 g des 2 Stunden an einer Kugelmühle feingemahlenen polymeren Tetrasulfids gemäß Beispiel 4, konnten nur noch 3% der ursprünglich vorhandenen $Mn^{2+}$-Menge in Lösung gefunden werden.

Beispiel 19

Nach analoger Behandlung wie in Beispiel 16 von 50 ml einer wäßrigen/methanolischen Lösung, die einen $Ni^{2+}$-Gehalt von 39 mg/l aufwies, mit 500 mg des 1 Stunde an einer Kugelmühle gemahlenen polymeren vernetzten Trisulfids gemäß Beispiel 6, konnten nur noch 5% der ursprünglich vorhandenen $Ni^{2+}$-Menge in Lösung gefunden werden.

Beispiel 20

Nach analoger Behandlung wie in Beispiel 16 von 10 ml einer wäßrigen/ethanolischen Lösung, die einen Gehalt von 2 mg/l komplexgebundenem $Pd^{\circ}$ aufwies, mit 200 mg des polymeren Disulfids gemäß Beispiel 2, konnten nur noch 20% der ursprünglich vorhandenen $Pd^{\circ}$-Menge in Lösung gefunden werden.

Beispiel 21

Nach analoger Behandlung wie in Beispiel 16 von 100 ml einer wäßrigen Lösung, die einen Gehalt von 27 mg/l $Pt^{4+}$ aufwies, mit 4 g des polymeren Sulfids gemäß Beispiel 1, konnten nur noch 5% der ursprünglich vorhandenen $Pt^{4+}$-Menge in Lösung gefunden werden.

Beispiel 22

Eine Säule von 2 cm Innendurchmesser, die mit 20 g des polymeren Tetrasulfids gemäß Beispiel 4 mit einer Korngröße von 0,2—0,6 mm befüllt war, wurde binnen 2 Stunden mit 1 l einer wäßrigen Lösung, die eine Konzentration von 5,0 mg $Cd^{2+}$/l aufwies, beschickt. Nachdem die Säule mit einem halben Liter entsalztem Wasser nachgewaschen wurde, wurde in dem mit der Waschflüssigkeit vereinigten Durchlauf die Gesamtmenge des noch vorhandenen $Cd^{2+}$ bestimmt. Gemäß dieser Analyse waren nur noch insgesamt 0,2 mg (4%) $Cd^{2+}$ vorhanden.

Beispiel 23

Die mit einer $Cd^{2+}$-Lösung beschickte Säule aus Beispiel 22 wurde in analoger Weise mit 1 l einer Lösung, die eine Konzentration von 1 mg $Hg^{2+}$/l aufwies, beschickt. Nach weiterem Verfahren wie in Beispiel 22 konnte in dem mit der Waschflüssigkeit vereinigten Durchlauf kein Quecksilber im analytisch erfaßbaren Umfang mehr nachgewiesen werden.

Beispiel 24

Eine Säule mit 2 cm Innendurchmesser, die mit 20 g des polymeren Trisulfids gemäß Beispiel 6 mit einer Korngröße von 0,2—0,6 mm befüllt war, wurde binnen 1,5 Stunden mit 1 l einer wäßrigen Lösung, die eine Konzentration von 8 mg $Ag^{+}$/l aufwies, beschickt. Nachdem die Säule mit einem halben Liter entsalztem Wasser nachgewaschen wurde, wurde in dem mit der Waschflüssigkeit vereinigten Durchlauf die Gesamtmenge des noch vorhandenen $Ag^{+}$ bestimmt. Danach waren nur noch insgesamt 0,3 mg $Ag^{+}$ (ca. 4%) vorhanden.

Beispiel 25

Unter Verwendung der in Beispiel 24 eingesetzten Säule wurde in analoger Weise der $Sn^{2+}$-Gehalt von 1 l einer wäßrigen Lösung von 9 mg/l auf insgesamt 0,2 mg $Sn^{2+}$ (ca. 2%) reduziert.

Beispiel 26

Unter Verwendung der in Beispiel 23 eingesetzten Säule wurde analog diesem Beispiel der $Pb^{2+}$-Gehalt von 1 l einer wäßrigen Lösung von 3 mg/l auf insgesamt 0,1 mg $Pb^{2+}$ (ca. 3%) reduziert.

**Patentansprüche**

1. Polymere Mono-, Di-, Tri- und Tetrasulfidverbindungen mit einer gegebenenfalls die Heteroatome Titan, Aluminium enthaltenden Organopolysiloxan-Grundstruktur, bestehend aus Einheiten der Formel

$$R^1—S_{1-4}—R^2 \qquad (1)$$

worin $R^1$ und $R^2$ für eine Gruppe der Formel

$$R^3—SiO_{3/2} \qquad (2)$$

stehen, in der $R^3$ für eine lineare oder verzweigte Alkylengruppe mit 1 bis 12 C-Atomen, eine Cycloalkylengruppe mit 5 bis 8 C-Atomen oder für Einheiten

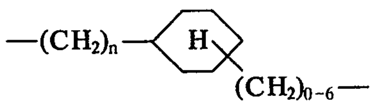 bzw. 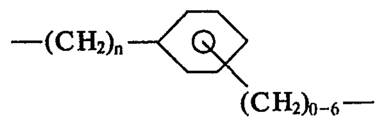

steht, in denen n eine Zahl von 1 bis 6 sein kann und die Zahl der Schwefel-ständigen Methylengruppen angibt, wobei $R^1$ und $R^2$ gleich oder verschieden sein können, und die freien Valenzen der Sauerstoffatome entweder durch Siliciumatome weiterer Gruppen der Formel (2) und/oder durch vernetzende Brückenglieder

$SiO_{4/2}$ oder $R'SiO_{3/2}$ oder $R'_2SiO_{2/2}$ bzw.
$TiO_{4/2}$ oder $R'TiO_{3/2}$ oder $R'_2TiO_{2/2}$ bzw.
$AlO_{3/2}$ oder $R'AlO_{2/2}$

abgesättigt sind, wobei R' eine Methyl- oder Ethylgruppe ist und das Verhältnis zwischen den Siliciumatomen in Formel (2) zu den Brückenatomen Silicium, Titan und Aluminium von 1 : 0 bis 1 : 10, betragen kann.

2. Polymere Mono-, Di-, Tri- und Tetrasulfide nach Anspruch 1, dadurch gekennzeichnet, daß $R^1$ und $R^2$ miteinander identisch sind.

3. Polymere Mono-, Di-, Tri- und Tetrasulfide nach Anspruch 1 oder 2, bestehend aus Einheiten der stöchiometrischen Zusammensetzung

$$S_{1-4}(CH_2CH_2CH_2SiO_{3/2})_2$$

4. Verfahren zur Herstellung der polymeren Mono-, Di-, Tri- und Tetrasulfide nach den Ansprüchen 1—3, dadurch gekennzeichnet, daß eine Monomerverbindung der allgemeinen Formel

$$R^4—S_{1-4}—R^5 \qquad (3)$$

in der $R^4$ und $R^5$ für eine Gruppe der allgemeinen Formel

$$R^3—Si(OAlk)_3 \qquad (4)$$

stehen, in der $R^3$ die in Anspruch 1 angegebene Bedeutung hat, wobei $R^4$ und $R^5$ gleich oder verschieden sein können, Alk eine lineare oder verzweigte Alkylgruppe mit 1 bis 5 C-Atomen bedeutet, gegebenenfalls nach Zusatz eines organischen Lösungsvermittlers und/oder eines Vernetzers der allgemeinen Formel

$$Me(OAlk)_{2-4}R'_{0-2} \text{ bzw.} \qquad (5)$$

$$Al(OAlk)_{2-3}R'_{0-1} \qquad (6)$$

wobei Me = Si oder Ti, Alk den bei Formel (4) genannten Bedeutungsumfang hat, R' eine Methyl- oder Ethylgruppe darstellt, mit mindestens der für eine vollständige Hydrolyse und Kondensation erforderlichen, bevorzugt jedoch überschüssigen Menge Wasser, umgesetzt und der gebildete Feststoff nach einer, gegebenenfalls direkt anschließenden Behandlung in Suspension bei Rückflußtemperatur, von der vorhandenen flüssigen Phase abgetrennt, getrocknet, gegebenenfalls getempert, gegebenenfalls gemahlen und/oder klassifiziert wird, wobei die Reihenfolge dieser Maßnahmen teilweise variieren kann bzw. mehrere dieser Maßnahmen parallel nebeneinander durchgeführt werden können.

5. Verfahren zur Herstellung der polymeren Mono-, Di-, Tri- und Tetrasulfide nach den Ansprüchen 1—3, dadurch gekennzeichnet, daß eine Monomerverbindung nach den Formeln (3) und (4) von Anspruch 4 oder seine Lösung, gegebenenfalls zusammen mit einem Vernetzer nach den Formeln (5)

und (6) von Anspruch 4 bei Raumtemperatur oder erhöhter Temperatur unter kräftigem Rühren in Wasser oder ein Wasser-Lösungsmittel-Gemisch eindosiert und der gebildete Feststoff, gegebenenfalls nach einer weiteren Behandlung bei der Rückflußtemperatur der Suspension, von der flüssigen Phase abgetrennt, getrocknet, gegebenenfalls getempert, gegebenenfalls gemahlen und/oder klassifiziert wird, wobei die Reihenfolge dieser Maßnahmen variabel ist bzw. mehrere dieser Maßnahmen nebeneinander durchgeführt werden können.

6. Verfahren nach Anspruch 4 oder 5, dadurch gekennzeichnet, daß die Hydrolyse und Polykondensation der Monomerverbindung in Gegenwart eines polaren Lösungsmittels, insbesondere von Methanol, Ethanol, n- und i-Propanol, n-, i- und t-Butanol oder n-Pentanol oder Mischungen davon durchgeführt wird.

7. Verfahren nach den Ansprüchen 4—6, dadurch gekennzeichnet, daß die Hydrolyse und Polykondensation der Monomerverbindung bei Raumtemperatur bis 200°C, bei Normaldruck oder einem Überdruck, welcher der Summe der Partialdrucke der Komponenten der Reaktionsmischung bei der angewandten Reaktionsmischung entspricht, durchgeführt wird.

8. Verfahren nach den Ansprüchen 4—7, dadurch gekennzeichnet, daß, gegebenenfalls unter Anwendung von Vakuum, bei Raumtemperatur bis 250°C getrocknet wird.

9. Verfahren nach den Ansprüchen 4—8, dadurch gekennzeichnet, daß, gegebenenfalls unter Anwendung von Vakuum, mindestens eine Stunde bis zu vier Tagen bei 150—400°C getempert wird.

10. Verwendung der polymeren Sulfidverbindungen nach vorstehenden Ansprüchen zur Entfernung von Ionen oder Verbindungen der Elemente der I., II., VI.—VIII. Nebengruppe des Periodensystems sowie des Zinns und Bleis aus Lösungen.

**Claims**

1. Polymeric mono-, di-, tri- and tetrasulphide compounds with an organopolysiloxane basic structure optionally containing the heteroatoms titanium and aluminium, consisting of units of the formula

$$R^1—S_{1-4}—R^2 \qquad (1)$$

wherein $R^1$ and $R^2$ represent a group of the formula

$$R^3—SiO_{3/2} \qquad (2)$$

wherein $R^3$ represents a straight or branched alkylene group having from 1 to 12 carbon atoms, a cycloalkylene group having from 5 to 8 carbon atoms, or the units

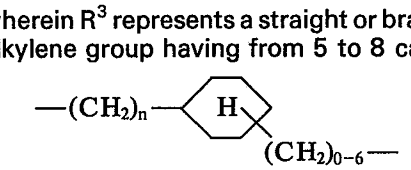

or

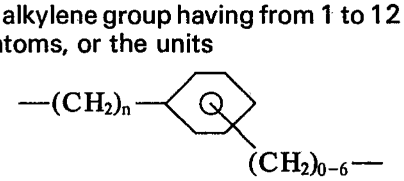

wherein n can be a number from 1 to 6 and represents the number of the methylene groups linked to sulphur, $R^1$ and $R^2$ can be the same or different and the free valences of the oxygen atoms are saturated either by silicon atoms of further groups of the formula (2) and/or by cross-linking bridge members

$SiO_{4/2}$ or $R'SiO_{3/2}$ or $R'_2SiO_{2/2}$ or
$TiO_{4/2}$ or $R'TiO_{3/2}$ or $R'_2TiO_{2/2}$ or
$AlO_{3/2}$ or $R'AlO_{2/2}$

wherein R' is a methyl or ethyl group and the ratio between the silicon atoms in formula (2) to the bridge atoms silicon, titanium and aluminium can be from 1 : 0 to 1 : 10.

2. Polymeric mono-, di-, tri- and tetrasulphides according to claim 1, characterised in that $R^1$ and $R^2$ are identical to each other.

3. Polymeric mono-, di-, tri- and tetrasulphides according to claim 1 or 2, consisting of units of the stoichiometric composition

$$S_{1-4}(CH_2CH_2CH_2SiO_{3/2})_2$$

4. A process for the production of the polymeric mono-, di-, tri- and tetrasulphides according to claims 1 to 3, characterised in that a monomer compound of the general formula

$$R^4—S_{1-4}—R^5 \qquad (3)$$

wherein $R^4$ and $R^5$ represent a group of the general formula

$$R^3—Si(OAlk)_3 \quad (4)$$

wherein $R^3$ has a meaning as defined in claim 1, $R^4$ and $R^5$ can be the same or different, Alk represents a straight or branched alkyl group having from 1 to 5 carbon atoms, optionally after addition of an organic solubilizer and/or a cross-linker of the general formula

$$Me(OAlk)_{2-4}R'_{0-2} \text{ or} \quad (5)$$

$$Al(OAlk)_{2-3}R'_{0-1} \quad (6)$$

whereby Me = Si or Ti, Alk has a meaning as defined in formula (4), R′ represents a methyl or ethyl group, is reacted with at least the quantity of water which is necessary for complete hydrolysis and condensation and which is preferably in excess thereof, and the solids formed are separated from the liquid phase present after an optionally directly subsequent treatment in suspension at reflux temperature, dried, optionally annealed, optionally ground and/or classified, it being possible for the order of these measures to be varied to a certain extent or several of these measures to be carried out at the same time as each other.

5. A process for the production of the polymeric mono-, di-, tri- and tetrasulphides according to claims 1 to 3, characterised in that a monomer compound according to the formulae (3) and (4) of claim 4 or a solution thereof, is metered into water or a watersolvent mixture optionally together with a cross-linker according to the formulae (5) and (6) of claim 4, at room temperature or elevated temperature, with intensive stirring, and solids formed are separated from the liquid phase optionally after further treatment at the reflux temperature of the suspension, dried, optionally annealed, optionally ground and/or classified, it being possible for the order of these measures to be varied or several of these measures to be carried out at the same time.

6. A process according to claim 4 or 5, characterised in that the hydrolysis and polycondensation of the monomer compound is carried out in the presence of a polar solvent, particularly methanol, ethanol, n- and i-propanol, n-, i- and t-butanol or n-pentanol or mixtures thereof.

7. A process according to claims 4 to 6, characterised in that the hydrolysis and polycondensation of the monomer compound is carried out at from room temperature up to 200°C, and under normal pressure or excess pressure which corresponds to the sum of the partial pressures of the components of the reaction mixture at the reaction temperature used.

8. A process according to claims 4 to 7, characterised in that drying is carried out, optionally under vacuum, at from room temperature up to 250°C.

9. A process according to claims 4 to 8, characterised in that annealing is carried out optionally under vacuum, for at least 1 hour to 4 days at from 150 to 400°C.

10. Use of the polymeric sulphide compounds according to the preceding claims for removing ions or compounds of the elements of the Ist, IInd, VIth to VIIIth sub-group of the Periodic Table of the Elements, as well as of tin and lead from solutions.

## Revendications

1. Composés polymères à base de mono-, di-, tri, et tétrasulfures avec une structure de base organopolysiloxane contenant éventuellement les hétéroatomes titane, aluminium, constitués d'unités répondant à la formule:

$$R^1—S_{1 à 4}—R^2 \quad (1)$$

où $R^1$ et $R^2$ représentent un groupe répondant à la formule

$$R^3—SiO_{3/2} \quad (2)$$

où $R^3$ représente un groupe alkylène linéaire ou ramifié avec 1 à 12 atomes de C, un groupe cycloalcoyle avec 5 à 8 atomes de C, ou des ensembles:

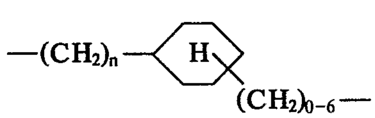

ou

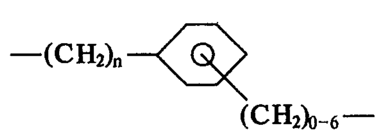

dans lesquelles n peut être un nombre entier de 1 à 6, et indique le nombre de groupes méthylène fixés sur le soufre, pendant que $R^1$ et $R^2$ peuvent être semblables ou différents et que les valences libres des atomes d'oxygène sont saturées soit par des atomes de silicium d'autres groupes de formule (2), et/ou par des éléments formant ponts réticulants:

$SiO_{4/2}$ ou $R'SiO_{3/2}$ ou $R'_2SiO_{2/2}$ ou encore
$TiO_{4/2}$ ou $R'TiO_{3/2}$ ou $R'_2TiO_{2/2}$ ou encore
$AlO_{3/2}$ ou $R'AlO_{2/2}$

R' étant un groupe méthyle ou éthyle, et le rapport entre les atomes de silicium de la formule (2) et les atomes de silicium, titane et aluminium formant pont pouvant se monter de 1 : 0 à 1 : 10.

2. Mono-, di-, tri- et tétrasulfures polymères suivant la revendication 1, caractérisés en ce que $R^1$ et $R^2$ sont semblables.

3. Mono-, di-, tri- et tétrasulfures polymères suivant l'une des revendications 1 et 2, caractérisés en ce qu'ils sont constitués d'ensembles de la composition stoechiométrique:

$S_{1\,à\,4}(CH_2CH_2CH_2SiO_{3/2})_2$

4. Procédé pour la préparation des mono-, di-, tri-, et tétrasulfures polymères suivant l'une des revendications 1 à 3, caractérisé en ce que l'on fait réagir un composé monomère répondant à la formule générale

$R^4—S_{1\,à\,4}—R^5$ (3)

où $R^4$ et $R^5$ représentent un groupe répondant à la formule générale:

$R^3—Si(Oalc)_3$ (4)

où $R^3$ a la signification indiquée dans la revendication 1, pendant que $R^4$ et $R^5$ peuvent être semblables ou différents, alc représente un groupe alcoyle, linéaire ou ramifié, possédant 1 à 5 atomes de C, éventuellement après addition d'un agent de dissolution organique ou/et d'un réticulant répondant à la formule générale:

$Me(Oalc)_{2\,à\,4}R'_{0\,à\,2}$ ou (5)

$Al(Oalc)_{2\,à\,3}R'_{0\,à\,1}$ (6)

où Me = Si ou Ti, alc a l'étendue de signification mentionnée pour la formule (4), R' représente un groupe méthyle ou éthyle, avec au moins la quantité d'eau nécessaire pour une hydrolyse et une condensation complètes, et de préférence toutefois un certain excès, et sépare la substance solide formée, éventuellement immédiatement après un traitement en suspension à la température du reflux, de la phase liquide existante, sèche, fait subir éventuellement un traitement thermique, puis broie éventuellement et/ou classe par grosseurs, pendant que cette succession des opérations peut varier partiellement ou que plusieurs de ces opérations peuvent être exécutées parallèlement entre elles.

5. Procédé pour la préparation des mono-, di-, tri- et tétrasulfures polymères suivant les revendications 1 à 3, caractérisé en ce que l'on introduit en le dosant un composé monomère suivant les formules (3) et (4) de la revendication 4, ou sa solution, éventuellement en commun avec un réticulant suivant les formules (5) et (6) de la revendication 4, à la température ambiante ou à une température plus élevée, en agitant énergiquement, dans de l'eau ou dans un mélange eausolvant, et que l'on sépare la substance solide formée de la phase liquide, éventuellement après un autre traitement à la température du reflux de la suspension, la sèche, et la soumet éventuellement à un traitement thermique, la broie éventuellement et/ou la classe par grosseurs, cette succession des opérations étant variable, ou plusieurs de ces opérations pouvant être effectuées parallèlement.

6. Procédé suivant l'une des revendications 4 ou 5, caractérisé en ce que l'hydrolyse et la polycondensation du composé monomère s'effectue en présence d'un solvant polaire, en particulier de méthanol, éthanol, n- et i-propanol, n-, i- et t-butanol, ou de n-pentanol, ou de leurs mélanges.

7. Procédé suivant l'une des revendications 4 à 6, caractérisé en ce que l'hydrolyse et la polycondensation du composé monomère sont effectuées à une température qui va de la température ambiante à 200°C, à la pression normale ou sous une surpression qui correspond à la somme des pressions partielles des composants du mélange réactionnel à la température de réaction utilisée.

8. Procédé suivant l'une des revendications 4 à 7, caractérisé en ce que l'on sèche à une température qui peut aller de la température ambiante à 250°C, en utilisant éventuellement le vide.

9. Procédé suivant l'une des revendications 4 à 8, caractérisé en ce que l'on fait subir un traitement thermique à 150 à 400°C, pendant au moins une heure et jusqu'à 4 jours, éventuellement en utilisant le vide.

10. Utilisation des composés sulfurés polymères suivant les revendications précédentes pour éliminer de solutions des ions ou des composés des éléments des sous-groupes I, II, VI et VIII du système périodique ainsi que d'étain et de plomb.